# EUROPEAN PATENT SPECIFICATION

(11) **EP 2 628 388 B1**
(45) Date of publication and mention of the grant of the patent: **22.07.2015**
(21) Application number: 13155398.4
(22) Date of filing: 15.02.2013
(51) Int. Cl.: A01K 1/00, B01D 53/58, B01D 53/78, B01D 53/00

(54) **A method of scrubbing air from a stable including heat recovery**
Stallluftreinigungsverfahren mit Wärmerückgewinnung
Procédé pour purifier de l'air d'une étable avec récupération de chaleur

(30) Priority: 15.02.2012 NL 1039381
(43) Date of publication of application: 21.08.2013
(60) Divisional application: 15164933.2
(73) Proprietor: INNO+ Holding B.V., 5981 NB Panningen (NL)
(72) Inventor: Ortmans, Maurice Caspar Joseph Maria, 5993 GL Maasbree (NL)
(74) Representative: Altenburg, Bernardus Stephanus Franciscus

(56) References cited:
- DE-A1- 3 228 997
- DE-A1- 3 709 521
- DE-B3-102006 002 719
- US-B1- 6 374 623

## Description

The present invention relates to method for scrubbing air to be purified from a stable with an aqueous washing liquid, wherein the air to be purified is passed through a scrubber having an air supply side and an air discharge side and cleaned air exits the scrubber, the method comprises the use of a heat exchanger, and wherein the heat exchanger comprises a wall having a first side and a second side, wherein a cooling medium is passed along a first side of the wall, and the air to be purified is subjected to heat exchange prior to having passed the air discharge side of the scrubber by cooling using the heat exchanger of at least 1 flow selected from the air to be purified and the aqueous washing liquid, wherein the wall of the heat exchanger keeps the at least one flow and the cooling medium separated.

Such a method is known in the art, for instance from European patent application EP2308583. In the air discharge channel a scrubber is placed which comprises a matrix onto which the washing liquid is introduced, with which ammonia is removed from the air to be purified.

A method according to the preamble is known from US6374623, which discloses a method by which energy of the spent air of a stable is reused by a climate control system provided with a heat pump to control the temperature of the air to be supplied to the stable, the spent air being then supplied to a washing unit for removal of undesirable components.

It is an object of the present invention to facilitate the capture of a contaminating gas from the air to be purified.

To this end, a method according to the preamble is characterized in that the scrubber comprises a matrix and air to be purified from the stable is passed through the matrix, aqueous washing liquid is introduced onto a location that is located relatively high on the matrix and flows over the matrix, and the aqueous washing liquid is collected at a location that is located relatively low; and
the matrix is in the form of a heat exchanger having a coolant-circuit wherein while passing along the heat exchanger, coolant as the cooling medium is passed through the coolant-circuit and washing liquid is passed over the exterior surface of the heat exchanger;
wherein the air to be purified is cooled to below the dew point, and wherein the heat extracted by cooling to below the dew point is passed back into the stable.

Thus, a more efficient absorption of contaminating gas, such as odorous gas, from the air to be purified is achieved. Especially stables with chickens, pigs and meat calves would greatly benefit from the improved inside climate which is enabled in a cost efficient way by the method according to the invention. More specifically, an improved removal of ammonia is combined with energy efficiency. The heat can for instance be used for underfloor heating, for heating water and for heating food such as porridge for pigs. Because of the improved efficiency of scrubbing the contaminating gas from the air to be purified, the stable can be ventilated relatively more, which may beneficial for the well-being of living creatures in the stable. Furthermore, the consumption of water used as washing liquid or used for the preparation of the washing liquid is reduced. By cooling below the dew point water vapour condenses from the air to be purified. Thus, latent heat is converted into tangible heat. This is especially advantageous since animals because of their metabolism emit water vapour. With a normal ventilation of the stable the energy-content thereof is lost. With this particularly preferred method this heat is used. The strong cooling results in an even more efficient capture of contaminating gas. The condensed water is for instance discharged. Cooling to below the dew point can for instance be achieved by increasing the flow rate with which the cooling medium is passed through the heat exchanger. Also a cooling machine (heat pump; a heat exchanger operated using groundwater etc.) can be used. The more water vapour is condensed from the air to be purified, the more latent heat is recovered. The cooling comprises lowering the temperature of the air to be purified and/or the aqueous washing liquid with at least 3°C, preferably at least 5°C and more preferably at least 8°C by using the heat exchanger. The cooling of the flow of air to be purified preferably takes place in the air discharge channel or else directly before that wherein at least 35%, such as at least 50% and preferably at least 80% of the air is passed directly to the scrubber without first ending up in the stable again. In the scope of the present application the term contaminating gas also comprises a contaminating vapour.

It has been found that when using the method according to the invention less formation of slime occurs on the matrix. Formation of slime on the matrix is a problem because the efficiency when purifying air decreases and the matrix needs to be cleaned. It is believed that because of the lower temperature the growth of microorganisms which are responsible for the formation of slime is slowed down.

By use of a coolant-circuit, pollution of the coolant is prevented, something which could adversely affect the efficiency of the heat exchanger when extracting heat and/or releasing heat to the stable. Further, the degree of cooling the air can be governed independently of the flow rate of the washing liquid. It is also possible to pass the coolant in counter-current with the air to be purified and in cross-flow with the washing liquid for an increased recovery of heat.

The Japanese publication JP10005534 describes that air originating from a chamber with airconditioning is scrubbed before being discharged. According to this application a cooling coil is used to pre-cool (e.g. from 32°C to 26°) air that is passed towards the airconditioning of the chamber, wherein water is pumped through the cooling coil which water is cooled by the washing liquid. The washing liquid itself gets cold as a result of the vaporization of water from the washing liquid due to the scrubbing process.

DE3228997 discloses a method for purification of odours from pig and cattle in stables by washing the exhaust air of the stable within a housing comprising an air cooler to condense the water vapour present in said exhaust air to the dew point, said water being used in the washing process and the energy obtained from the condensation being reused in the stable.

According to a favourable embodiment, the air to be purified is air that contains ammonia.

Removing ammonia from air to be purified at least partially is an important application of the method according to the invention.

According to a favourable embodiment, the stable has
- an air discharge channel, and
- an air supply channel
and the air discharge channel is provided with the scrubber wherein the air to be purified is subjected to the scrubbing in the air discharge channel.

Thus the air can be efficiently subjected to heat exchange and ammonia can be efficiently trapped. The air discharge channel passes air from the stable towards the atmosphere and via the air supply channel outside air is introduced into the stable.

According to a favourable embodiment, the heat recovered from the air is released to air that is supplied to the stable via the air supply channel.

Thus, the air in the stable can be heated. This permits the improvement of the living conditions and/or climate conditions in the stable and the saving of energy. Use will be made of a second heat exchanger which will be located right before, in or right behind the air supply channel. The term "right before" means that at least 50% and preferably at least 80% of the air passing through the second heat exchanger enters the air supply channel directly.

According to a favourable embodiment, the heat exchanger is a heat exchanger located before the scrubber with which air to be purified is cooled down before being supplied to the scrubber.

Advantageously, this is done very efficiently in the air discharge channel. The heat exchanger can cool to such a large extent that water vapour condenses, which contributes to the removal of odorous gases, such as gases containing sulphur, from the air to be purified. The emission of odor can thus be reduced.

According to a favourable embodiment, washing liquid from the scrubber is subjected to heat exchange for the cooling down thereof before being re-used for scrubbing.

Thus, the air resistance in the air discharge channel can be kept to a minimum since a separate heat exchanger present before the scrubber can be avoided and/or the capacity of this heat exchanger may be smaller. When the method is used for removing ammonia from the air to be purified, in practice at least part of the washing liquid will be subjected to a purification, for instance a biological purification for breaking down the ammonia, prior to cooling down the washing liquid using the heat exchanger.

According to a favourable embodiment, the washing liquid is acidified water.

The present invention will now be illustrated with reference to the drawing where
Fig. 1 shows a cross-sectional top view of part of a stable (embodiment not according to the invention);
Fig. 2 shows a cross-sectional top view of part of an alternative stable (embodiment according to the invention); and
Fig. 3 shows a cross-section in side view of a device for washing air and recovering heat.

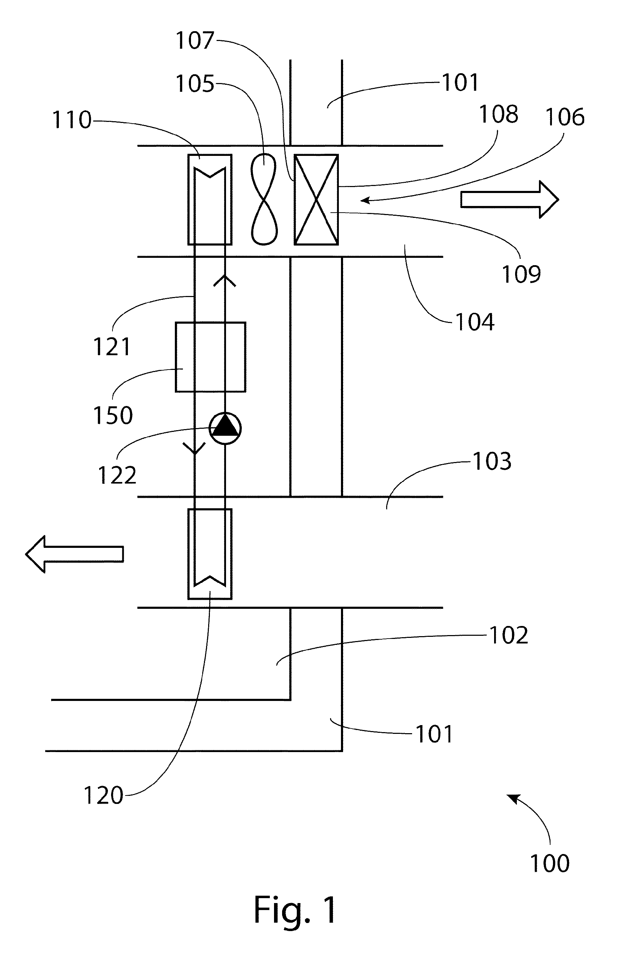

Fig. 1 shows part of a stable 100 with an exterior wall 101, which stable 100 has an interior space 102 in which animals such as pigs are kept which produce ammonia, a gaseous compound. In the exterior wall 101 an air supply channel 103 for fresh outside air and an air discharge channel 104 for the discharge of air from the stable 100 are provided. A fan 105 provides for the circulation of air.

In order not to pollute the outside air with ammonia from the stable 100, in the air discharge channel 104 a scrubber 106 is provided. The scrubber 106 has an air supply side 107 and an air discharge side 108. In the embodiment illustrated here the scrubber 106 comprises a matrix 109 over which acidified water is passed as a washing liquid for capturing ammonia from the air of the stable 100. This is known per se.

According to the invention the capturing is conducted at a reduced temperature. With the embodiment illustrated in Fig. 1 this takes place by lowering the temperature of the air from the stable 100 in the air discharge channel 104 by using a heat exchanger 110 with for instance at least 10°C.

Lowering the air temperature using the heat exchanger 110 has as a side effect that the density of the air increases, as a result of which the fan 105 here placed downstream of the heat exchanger 110 can operate a litte more efficiently.

The heat extracted from the air to be scrubbed can be used for heating air that is introduced via the air supply channel into the space 102, using a second heat exchanger 120.

The air supply channel 103 and the air discharge channel 104 are preferably spaced apart at a large distance in order to achieve that carbon dioxide emitted by animals is efficiently discharged and is not introduced into the space again. The heat exchanger 110 and the second heat exchanger 120 are connected with each other via conduits 121 and a working liquid - for instance a mixture of water and glycol - is circulated using a pump 122.

Fig. 1 also shows an optional cooling module 150 with which the working liquid is cooled further before it is passed towards the heat exchanger 110. Thus, also when the temperature in the space 102 is substantially equal to the outside temperature air to be purified can be cleaned efficiently. The heat that is extracted will advantageously be released to the space 102 or to the working liquid coming from the heat exchanger 110. Hereby, the capacity of the heat exchanger 110 and the second heat exchanger 120 may be smaller, which is advantageous for the flow resistance and the capital expense.

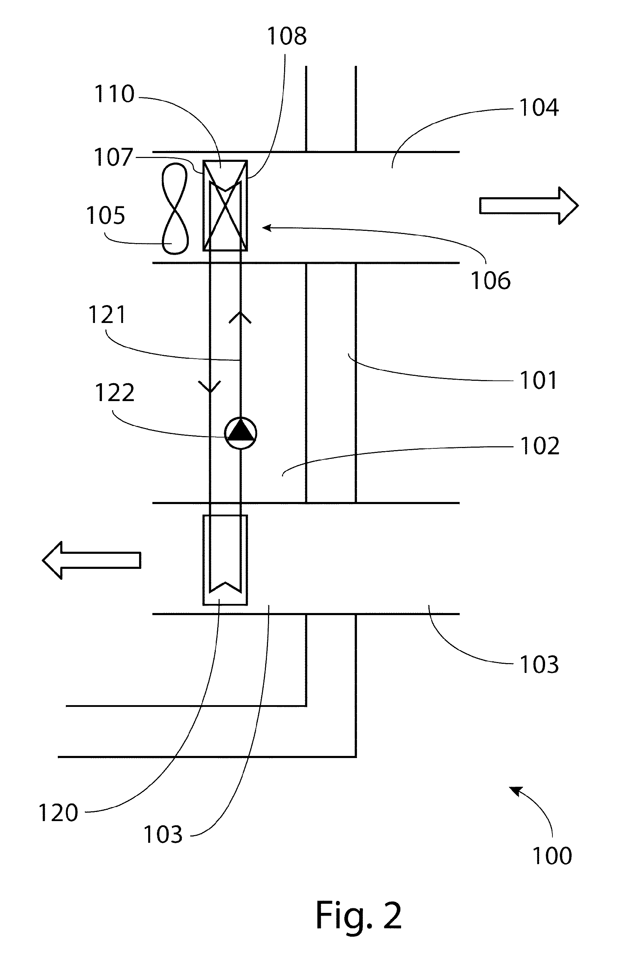

Fig. 2 shows a cross-sectional top view of an alternative embodiment of the stable of Fig. 1. The difference is that on the upper side of the heat exchanger 110 on heat exhanging elements thereof (for instance tubes, plates or fins) washing liquid is introduced that flows downwards along the heat exhanging elements. Thus the heat exchanger 110 functions as a scrubber, which means a saving of cost as well as a reduction of the air resistance through the air discharge channel 104.

An experiment was carried out in a stable 100 having a volume of ca. 16,000 m³ and 1 central air discharge channel 104 along which air was sucked off with a flow rate of 18,000 m³/hour. The central air discharge channel 104 was provided with a plastic Calorplast heat exchanger 110 PE-RT 5RR (Calorplast Wärmetechnik GmbH, Krefeld, Germany) having a heat exchanging surface area of 5 m². A mixture of 25% glycol 75% water having a flow rate of 31 m³ /h was circulated through the heat exchanger 110 using pumps 122. The temperature in the stable was 23°C and the temperature of the outside air varied between -10 and 10°C. The heat exchanger 110 acted simultaneously as a matrix for scrubbing gas, for which purpose 16 m³ /h washing liquid was sprayed onto the heat exchanger 110 distributed over the upper side thereof. The washing liquid was aqueous sulphuric acid with a pH of 4.

It was found that the emission of odors diminished considerably. Further, also ammonia was removed very efficiently, the content dropping from 20 ppm to 5 ppm.

The device was used during a period of 4 months (under changing circumstances) during which no significant degree of formation of slime occurred on the scrubber 106, which was an improvement compared to the situation without cooling.

Cooling of the first heat exchanger 110 resulted in the formation of condensate, wherein the amount thereof varied between 51 litre/h (at an outside air temperature of 10°) and 171 litre/h (at a temperature of -10°). The incoming air was thereby heated to respectively 15.2°C and 8.2°C. The circulating of coolant required 1,0 kW. By letting the water vapour condense the COP can reach values of over 150!

Recovered heat can also be used for e.g. underfloor heating, wherein the temperature can be raised using a heat pump.

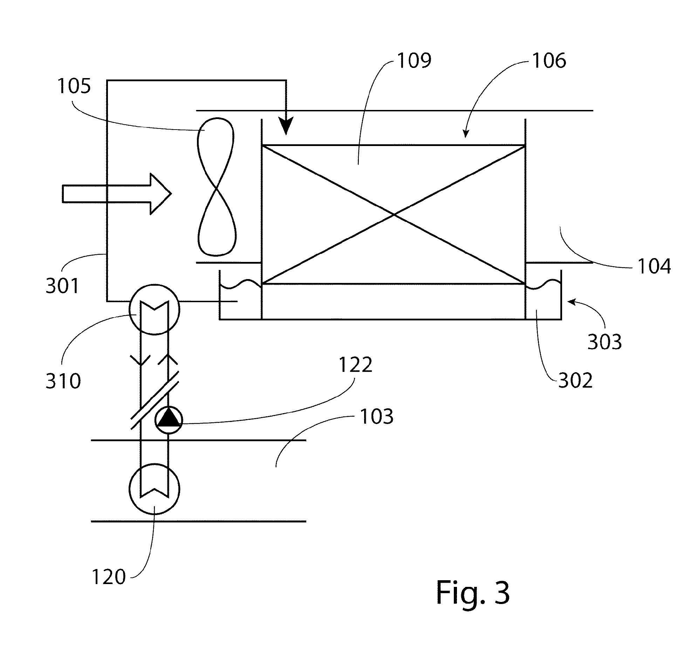

Fig. 3 shows a schematic representation of the scrubber 106 which comprises a matrix 109, wherein via a conduit 301 relatively cold washing liquid 302 is introduced onto the matrix 109. The washing liquid 302 is collected in a collection reservoir 303 and is heated by heat exchange with the air before it exits the scrubber 106. Heat is extracted from the washing liquid 302 by means of a fluid-fluid heat exchanger 310 for forming the relatively cold washing liquid 302. This embodiment can be used in the space 102 of a stable 100, as well as in an air discharge channel 104.

The method according to the invention can be varied in various ways within the scope of the present invention. Thus, for instance, if the outside air is warmer than the air in the stable a cooling device can be used instead of the fluid-fluid heat exchanger 310. Also cooling using groundwater is very well possible, for instance via the second heat exchanger 120. This will cool the air in the stable and thus less cooling will be required in the air discharge channel 104.

## Claims

1. Method for scrubbing air to be purified from a stable (100) with an aqueous washing liquid (302), wherein the air to be purified is passed through a scrubber (106) having an air supply side (107) and an air discharge side (108) and cleaned air exits the scrubber (106),
the method comprises the use of a heat exchanger (110), and
wherein the heat exchanger (110) comprises a wall having a first side and a second side, wherein a cooling medium is passed along a first side of the wall, and the air to be purified is subjected to heat exchange prior to having passed the air discharge side (108) of the scrubber (106) by cooling using the heat exchanger (110) of at least 1 flow selected from the air to be purified and the aqueous washing liquid (302), wherein the wall of the heat exchanger (110) keeps the at least one flow and the cooling medium separated,
**characterized in that** the scrubber (106) comprises a matrix (109) and air to be purified from the stable (100) is passed through the matrix (109), aqueous washing liquid (302) is introduced onto a location that is located relatively high on the matrix (109) and flows over the matrix (109), and the aqueous washing liquid (302) is collected at a location that is located relatively low;
and
the matrix (109) is in the form of a heat exchanger (110) having a coolant-circuit wherein while passing along the heat exchanger, (110) coolant as the cooling medium is passed through the coolant-circuit and washing liquid (302) is passed over the exterior surface of the heat exchanger (110);
wherein the air to be purified is cooled to below the dew point, and wherein the heat extracted by cooling to below the dew point is passed back into the stable (100).

2. The method according to claim 1, wherein the air to be purified is air that contains ammonia.

3. The method according to claim 1 or 2, wherein the stable (100) has
- an air discharge channel (104), and
- an air supply channel (103)
and the air discharge channel (104) is provided with the scrubber (106) wherein the air to be purified is subjected to the scrubbing in the air discharge channel (104).

4. The method according to claim 3, wherein the heat recovered from the air is released to air that is supplied to the stable (100) via the air supply channel (103).

5. The method according to any of the preceding claims, wherein the heat exchanger (110) is a heat exchanger (110) located before the scrubber (106) with which air to be purified is cooled down before being supplied to the scrubber (106).

6. The method according to any of the preceding claims, wherein washing liquid (302) from the scrubber (106) is subjected to heat exchange for the cooling down thereof before being re-used for scrubbing.

7. The method according to any of the preceding claims, wherein the washing liquid is acidified water.

## Patentansprüche

1. Verfahren zur Reinigung von Luft eines Stalls (100) mit einer wässrigen Waschflüssigkeit (302), wobei die zu reinigende Luft durch einen Wäscher (106) mit einer Zuluftseite (107) und einer Abluftseite (108) geleitet wird und gereinigte Luft den Wäscher (106) verlässt, wobei das Verfahren die Verwendung eines Wärmeaustauschers (110) umfasst und der Wärmeaustauscher (110) eine Wand mit einer ersten Seite und einer zweiten Seite umfasst, wobei ein Kühlmedium entlang einer ersten Seite der Wand geleitet wird und die zu reinigende Luft einem Wärmeaustausch, bevor sie die Abluftseite (108) des Wäschers (106) passiert hat, unterzogen wird durch Kühlen unter Verwendung des Wärmeaustauschers (110) wenigstens eines Stroms, der aus der zu reinigenden Luft und der wässrigen Waschflüssigkeit (302) ausgewählt ist, wobei die Wand des Wärmeaustauschers (110) den wenigstens einen Strom und das Kühlmedium voneinander getrennt hält,
**dadurch gekennzeichnet, dass** der Wäscher (106) eine Matrix (109) umfasst und die zu reinigende Luft aus dem Stall (100) durch die Matrix (109) geleitet wird, wässrige Waschflüssigkeit (302) an einer Stelle eingeleitet wird, die relativ hoch auf der Matrix (109) positioniert ist, und über die Matrix (109) strömt und die wässrige Waschflüssigkeit (302) an einer Stelle gesammelt wird, die relativ tief positioniert ist;
und
die Matrix (109) in der Form eines Wärmeaustauschers (110) mit einem Kühlmittelkreislauf vorliegt, wobei, während der Wärmeaustauscher (110) passiert wird, Kühlmittel als das Kühlmedium durch den Kühlmittelkreislauf geleitet wird und Waschflüssigkeit (302) über die Außenseite des Wärmeaustauschers (110) geleitet wird; wobei die zu reinigende Luft unter den Taupunkt gekühlt wird und wobei die durch Kühlen unter den Taupunkt entzogene Wärme in den Stall (100) zurückgeführt wird.

2. Das Verfahren gemäß Anspruch 1, wobei die zu reinigende Luft ammoniakhaltige Luft ist.

3. Das Verfahren gemäß Anspruch 1 oder 2, wobei der Stall (100)
- einen Abluftkanal (104) und
- einen Zuluftkanal (103) aufweist
und der Abluftkanal (104) mit dem Wäscher (106) ausgestattet ist, wobei die zu reinigende Luft im Abluftkanal (104) der Wäsche unterzogen wird.

4. Das Verfahren gemäß Anspruch 3, wobei die aus der Luft zurückgewonnene Wärme an die Luft abgegeben wird, die dem Stall (100) über den Zuluftkanal (103) zugeführt wird.

5. Das Verfahren gemäß einem der vorhergehenden Ansprüche, wobei der Wärmeaustauscher (110) ein vor dem Wäscher (106) positionierter Wärmeaustauscher (110) ist, mit dem die zu reinigende Luft abgekühlt wird, bevor sie dem Wäscher (106) zugeführt wird.

6. Das Verfahren gemäß einem der vorhergehenden Ansprüche, wobei Waschflüssigkeit (302) vom Wäscher (106) einem Wärmeaustausch zu deren Abkühlung unterzogen wird, bevor sie zum Waschen wiederverwenden wird.

7. Das Verfahren gemäß einem der vorhergehenden Ansprüche, wobei die Waschflüssigkeit angesäuertes Wasser ist.

## Revendications

1. Procédé pour purifier de l'air à purifier provenant d'une étable (100) au moyen d'un liquide de lavage aqueux (302), l'air à purifier étant passé à travers un purificateur (106) ayant un côté (107) alimenté en air et un côté (108) d'évacuation d'air, de l'air nettoyé sortant du purificateur (106), le procédé comprend l'utilisation d'un échangeur de chaleur (110), l'échangeur de chaleur (110) comprenant une paroi ayant un premier côté et un deuxième côté, un fluide de refroidissement passant le long d'un premier côté de la paroi, et l'air à purifier étant soumis à un échange de chaleur avant d'avoir passé le côté (108) d'évacuation de l'air du purificateur (106), par refroidissement à l'aide de l'échangeur de chaleur (110) d'au moins un flux sélectionné dans l'air à purifier et à l'aide du liquide de lavage aqueux (302), la paroi de l'échangeur de chaleur (110) maintenant séparés ledit au moins un flux et le fluide de refroidissement,
**caractérisé en ce que** le purificateur (106) comprend une matrice (109), et **en ce que** l'air à purifier provenant de l'étable (100) est passé à travers la matrice (109), du liquide de lavage aqueux (302) étant introduit en un emplacement qui se trouve relativement haut sur la matrice (109), et s'écoule sur la matrice (109), le liquide de lavage aqueux (302) étant collecté en un emplacement qui se trouve relativement bas ;
et
la matrice (109) est sous la forme d'un échangeur de chaleur (110) ayant un circuit de refroidissement, le liquide de refroidissement, en tant qu'agent de refroidissement, lorsqu'il passe le long de l'échangeur de chaleur (110), passe à travers le circuit de refroidissement, et le liquide de lavage (302) est passé sur la surface extérieure de l'échangeur de chaleur (110) ;
l'air à purifier étant refroidi en dessous du point de rosée, et la chaleur extraite par refroidissement au-dessous du point de rosée étant renvoyée dans l'étable (100).

2. Le procédé selon la revendication 1, dans lequel l'air à purifier est de l'air contenant de l'ammoniac.

3. Le procédé selon la revendication 1 ou la revendication 2, dans lequel l'étable (100) comprend
- un conduit (104) d'évacuation d'air, et
- un conduit (103) d'alimentation en air
le conduit (104) d'évacuation d'air comportant le purificateur (106), l'air à purifier étant soumis à l'épuration dans le conduit (104) d'évacuation d'air.

4. Le procédé selon la revendication 3, dans lequel la chaleur récupérée dans l'air est réintroduite dans l'air qui est fourni à l'étable (100) via le conduit (103) d'alimentation en air.

5. Le procédé selon l'une quelconque des revendications précédentes, dans lequel l'échangeur de chaleur (110) est un échangeur de chaleur (110) situé avant le purificateur (106) avec lequel de l'air à purifier est refroidi avant d'être alimenté dans le purificateur (106).

6. Le procédé selon l'une quelconque des revendications précédentes, dans lequel le liquide de lavage (302) provenant du purificateur (106) est soumis à un échange de chaleur pour le refroidissement de celui-ci avant qu'il soit réutilisé pour la purification.

7. Le procédé selon l'une quelconque des revendications précédentes, dans lequel le liquide de lavage est de l'eau acidifiée.
